# EUROPEAN PATENT SPECIFICATION

(11) **EP 2 551 135 B1**
(45) Date of publication and mention of the grant of the patent: **03.09.2014**
(21) Application number: 11759289.9
(22) Date of filing: 17.03.2011
(51) Int. Cl.: B60H 1/22, B60H 1/00, B60H 1/32

(54) **OPERATION METHOD OF HEAT PUMP-TYPE VEHICLE AIR CONDITIONING SYSTEM**
BETRIEBSVERFAHREN FÜR EIN FAHRZEUGKLIMAANLAGENSYSTEM MIT EINER WÄRMEPUMPE
PROCÉDÉ DE FONCTIONNEMENT DE SYSTÈME CLIMATISATION DE VÉHICULE DU TYPE POMPE

(30) Priority: 23.03.2010 JP 2010065474
(43) Date of publication of application: 30.01.2013
(73) Proprietor: Honda Motor Co., Ltd., Minato-ku Tokyo 107-8556 (JP)
(72) Inventor: KIMURA, Kenzo, Wako-shi Saitama 351-0193 (JP); YAMAOKA, Daisuke, Wako-shi Saitama 351-0193 (JP); ESAKI, Hidenori, Wako-shi Saitama 351-0193 (JP); MASUZAWA, Kosuke, Wako-shi Saitama 351-0193 (JP); KOBAYASHI, Satoshi, Wako-shi Saitama 351-0193 (JP)
(74) Representative: Feller, Frank
(86) International application number: PCT/JP2011/056327
(87) International publication number: WO 2011/118483

(56) References cited:
- DE-A1- 10 350 192
- JP-A- 6 040 248
- JP-A- 6 135 221
- JP-A- 7 280 362
- JP-A- 10 297 270
- JP-A- 2000 016 072
- US-A1- 2004 079 096
- US-A1- 2009 113 913

## Description

### Technical Field

The present invention relates to a method of operating a heat-pump type vehicular air conditioning system incorporated in a vehicle for air-conditioning the passenger cabin of the vehicle.

### Background Art

Vehicles, e.g., engine automobiles having an internal combustion engine, hybrid automobiles having an engine and a secondary battery (or a secondary battery and a fuel cell or the like) in combination, electric automobiles, and fuel cell automobiles, incorporate various types of vehicular air conditioning systems therein.

For example, as shown in FIG. 12, the vehicular air conditioning apparatus disclosed in Japanese Laid-Open Patent Publication No. 2009-023564 includes a compressor 1 for drawing in and discharging a refrigerant, a condenser 3 disposed in an air conditioning unit case 2 for heating air by performing heat exchange between air and the refrigerant that is discharged from the compressor 1 in a heating mode, a receiver 4 for receiving refrigerant that flows in from the condenser 3 and performing gas-liquid separation in the heating mode, a supercooler 5 for supercooling liquid refrigerant that flows in from the receiver 4 by performing heat exchange between the liquid refrigerant and ambient air in the heating mode, a depressurizer 6 for depressurizing the refrigerant that is supercooled by the supercooler 5 in the heating mode, and an outdoor heat exchanger 7 for evaporating the refrigerant that is depressurized by the depressurizer 6 in the heating mode.

With the above vehicular air conditioning apparatus, (a degree of) subcooling is achieved by the receiver 4 and further is achieved reliably by the supercooler 5, which is disposed downstream of the receiver 4, using ambient air in the heating mode. The vehicular air conditioning apparatus is rendered highly efficient and excellent in heating performance by means of a relatively simple cyclic arrangement.

According to Japanese Laid-Open Patent Publication No. 2009-023564, the receiver 4 and the supercooler 5 are used only in the heating mode, and are not necessary in a cooling mode. Therefore, the number of components dedicated to the heating mode is increased, thereby making the vehicular air conditioning apparatus uneconomical.

According to Japanese Laid-Open Patent Publication No. 2009-023564, furthermore, the vehicular air conditioning apparatus does not have a buffer for compensating for a refrigerant shortage when liquid refrigerant remains trapped in the outdoor heat exchanger 7 that is cooled in the cooling mode. Consequently, due to the refrigerant shortage, air-conditioning performance is lowered.

Document US 2009/113913 A1, which is considered as the closest prior art, discloses a method of operating a vehicle air conditioning system which comprises a condenser connected to a heat pump circulation path for circulating refrigerant, a first evaporator, a heater which performs heat exchange between the refrigerant and the air-conditioning air and a second evaporator for performing heat exchange between the refrigerant and the heating medium. The air conditioning system of US 2009/113913 A1 can be operated in both a cooling and a heating mode.

### Summary of the invention

The present invention has been made in an effort to solve the aforementioned problems. An object of the present invention is to provide a heat-pump type vehicular air conditioning system, which is capable of selecting either a heating capability priority or an operation efficiency priority depending on inside and outside temperatures of a passenger compartment, for enabling good air conditioning capability and improving economic efficiency.

According to the present invention, there is provided a method of operating a heat pump type vehicular air conditioning system comprising a condenser for performing heat exchange between a refrigerant and ambient air, the condenser being connected to a heat pump circulation path for circulating the refrigerant with a compressor, a first evaporator connected to the heat pump circulation path, for performing heat exchange between the refrigerant and air-conditioning air, a heater connected to the heat pump circulation path, for performing heat exchange between the refrigerant, which has been delivered from the compressor, and the air-conditioning air, which has passed through the evaporator, a second evaporator connected to a branch path that branches from the heat pump circulation path, for performing heat exchange between the refrigerant and a heat medium that is discharged from a cabin, a gas-liquid separation refrigerant storage unit disposed downstream of the condenser, a subcondenser disposed downstream of the gas-liquid separation refrigerant storage unit, a bypass unit for connecting the gas-liquid separation refrigerant storage unit downstream of and in series with the heater in bypassing relation to the condenser in a heating mode, the bypass unit having a pressure loss device for imparting a pressure loss to the refrigerant, and temperature detectors for detecting a temperature outside of a vehicle and a temperature inside of the vehicle.

The method comprises the steps of establishing a cold-climate operating mode for increasing the temperature of the air conditioning air that is heated by the heater and discharged into the cabin, and a normal operating mode for increasing heating efficiency with respect to electric power, detecting the temperature outside of the vehicle and the temperature inside of the vehicle, and selecting either the cold-climate operating mode or the normal operating mode based on the detected temperature outside of the vehicle and the detected temperature inside of the vehicle, and controlling the pressure loss device.

According to the present invention, when a pressure loss is imparted to the refrigerant by the pressure loss device, the pressure of the refrigerant is increased, and in addition, the amount of work performed by the compressor is increased. Therefore, the temperature of the air-conditioning air, which is heat-exchanged by the heater, is increased when the air-conditioning air is discharged into the cabin, thereby quickly heating the cabin (cold-climate operating mode).

When the pressure loss imparted to the refrigerant is reduced, the pressure of the refrigerant is lowered, and in addition, the amount of work performed by the compressor is lowered. Therefore, a heating COP (a measure of heating ability per heating electric power consumption) is increased for allowing the air conditioning system to operate economically in a heating mode (normal operating mode).

Therefore, the vehicular air conditioning system is capable of selecting either a heating capability priority or an operation efficiency priority, depending on the temperatures inside and outside of the cabin, for thereby enabling good air conditioning capability and improving economic efficiency.

### Brief Description of Drawings

FIG. 1 is a schematic block diagram of a heat-pump type vehicular air conditioning system to which an operating method according to a first embodiment of the present invention is applied;
FIG. 2 is a schematic view showing the manner in which the vehicular air conditioning system operates in a heating mode;
FIG. 3 is a flowchart of the operating method;
FIG. 4 is a diagram showing a cycle on a Mollier chart plotted when the vehicular air conditioning system operates in a cold-climate operating mode;
FIG. 5 is a diagram showing the relationship between the temperature outside of the vehicle, the temperature inside of the vehicle, and operating modes;
FIG. 6 is a diagram illustrating a process of controlling the opening of an electronic expansion valve;
FIG. 7 is a diagram showing the relationship between the opening of the electronic expansion valve, consumed electric power, and a heating COP;
FIG. 8 is a diagram showing a cycle on a Mollier chart plotted when the vehicular air conditioning system operates in a normal operating mode;
FIG. 9 is a schematic block diagram of a heat-pump type vehicular air conditioning system to which an operating method according to a second embodiment of the present invention is applied;
FIG. 10 is a diagram illustrating a control process for switching between a capillary and a bypass passage;
FIG. 11 is a diagram showing the relationship between switching between the capillary and the bypass passage, consumed electric power, and a heating COP; and

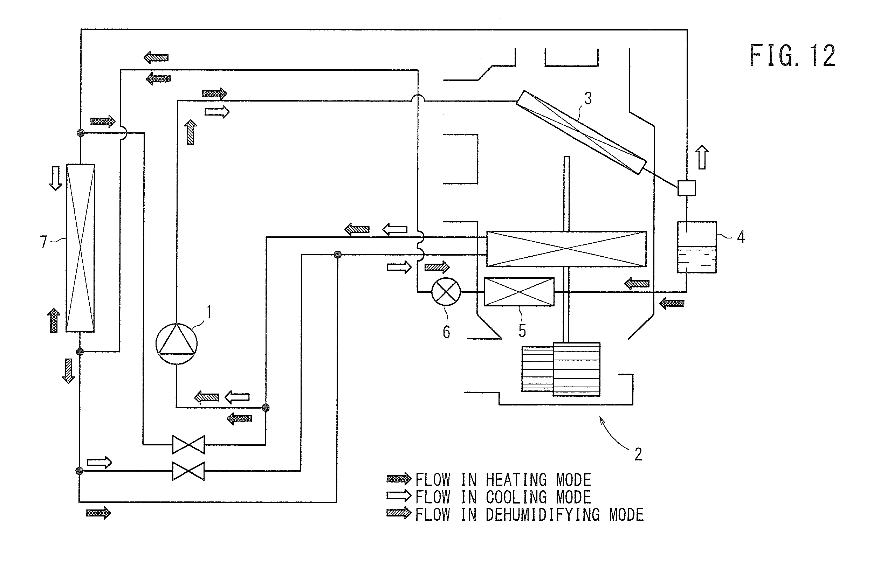

FIG. 12 is a diagram illustrative of the vehicular air conditioning apparatus disclosed in Japanese Laid-Open Patent Publication No. 2009-023564.

### Description of Embodiments

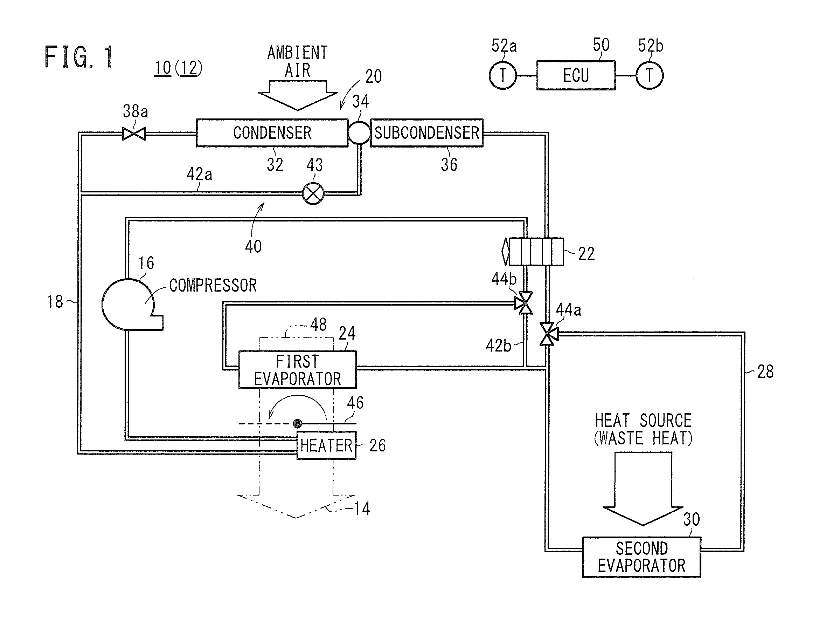

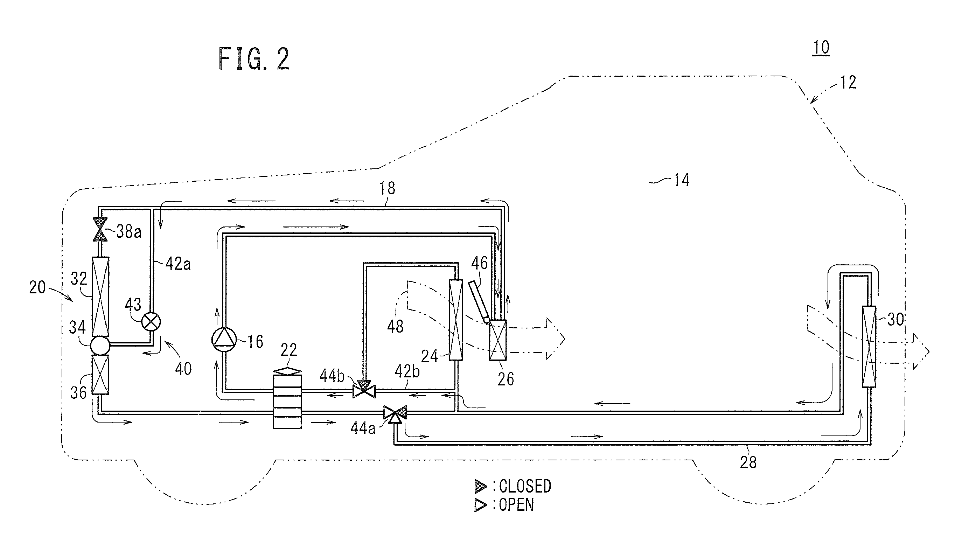

As shown in FIGS. 1 and 2, a heat pump-type vehicular air conditioning system 10 to which an operating method according to a first embodiment of the present invention is applied is incorporated in an automobile (vehicle) 12 for air-conditioning a passenger cabin (vehicle compartment) 14 of the automobile 12.

The air conditioning system 10 includes a heat pump circulation path 18 for circulating a refrigerant with a compressor 16. The heat pump circulation path 18 includes therein a condenser unit (subcooling condenser) 20 for performing heat exchange between the refrigerant and ambient air, an expansion valve 22 for depressurizing the refrigerant delivered from the condenser unit 20, a first evaporator 24 for performing heat exchange between the refrigerant, which has passed through the expansion valve 22, and air-conditioning air, and a heater 26 for performing heat exchange between the refrigerant, which has been delivered from the compressor 16, and the air-conditioning air, which has passed through the first evaporator 24.

The heat pump circulation path 18 branches into a branch path 28, which includes a second evaporator 30 for performing heat exchange between a heat medium discharged from the cabin 14 (waste heat gas from the cabin 14) and the refrigerant.

The condenser unit 20 includes a condenser (condensing device) 32, a gas-liquid separation refrigerant storage unit (subcooling tank) 34, and a subcondenser (supercooling device) 36, which are connected mutually in series downstream of the heater 26, and through which the refrigerant flows in a cooling mode. A solenoid-operated valve 38a is disposed upstream of the condenser 32.

A bypass unit 40 is connected to the heat pump circulation path 18, for connecting the heater 26 and the gas-liquid separation refrigerant storage unit 34 to each other in bypassing relation to the condenser 32 in a heating mode. The bypass unit 40 includes a first bypass passage 42a that branches from the heat pump circulation path 18 and is connected to the gas-liquid separation refrigerant storage unit 34 of the condenser unit 20. The first bypass passage 42a includes an electronic expansion valve 43 the opening of which is adjustable by an electric signal, and which functions as a pressure loss device for causing the refrigerant to undergo a pressure loss. The electronic expansion valve 43 may be replaced with an automatic restriction valve, an automatic flow regulating valve, a fixed restriction valve, or the like.

The expansion valve 22 includes a means (not shown) for detecting the temperature of the refrigerant, which is delivered from the first evaporator 24 and cools the air-conditioning air. An opening of the expansion valve 22 is automatically variable depending on the temperature and pressure of the refrigerant delivered from the first evaporator 24, for thereby varying the flow rate of the refrigerant.

The heat pump circulation path 18 also includes a three-way valve 44a disposed at a junction between a path portion near the expansion valve 22 and an inlet of the branch path 28. The heat pump circulation path 18 further includes a three-way valve 44b disposed at a junction between an outlet of a second bypass passage 42b, which bypasses the first evaporator 24, and the heat pump circulation path 18. The second evaporator 30 is disposed in a rear portion of the automobile 12 (see FIG. 2).

Between the first evaporator 24 and the heater 26, an air mixing damper 46 is disposed for introducing air-conditioning air cooled by the first evaporator 24 into the cabin 14 in bypassing relation to the heater 26.

The automobile 12 has an ambient air inlet 48 for introducing ambient air as air-conditioning air. The first evaporator 24 and the heater 26 are successively disposed in this order downstream of the ambient air inlet 48.

The air conditioning system 10 includes a controller (ECU) 50, which functions as a flow path switching means for controlling the solenoid-operated valve 38a and the three-way valves 44a, 44b to switch between the heating mode and the cooling mode. The controller 50 also controls the air conditioning system 10 in its entirety (see FIG. 1). A first temperature sensor 52a for detecting the temperature outside of the vehicle, and a second temperature sensor 52b for detecting the temperature inside of the vehicle (the temperature inside of the cabin) are connected respectively to the controller 50.

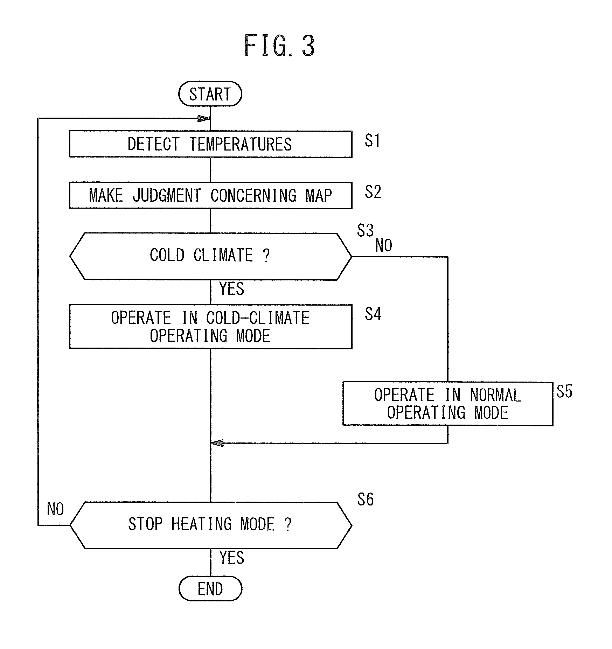

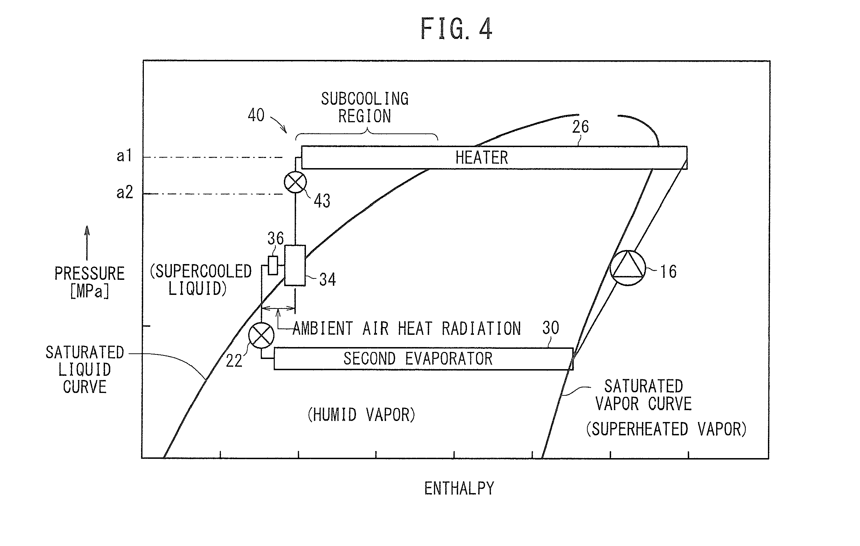

A method of operating the air conditioning system 10 will be described below with reference to the flowchart shown in FIG. 3 and the cycle diagram shown in FIG. 4.

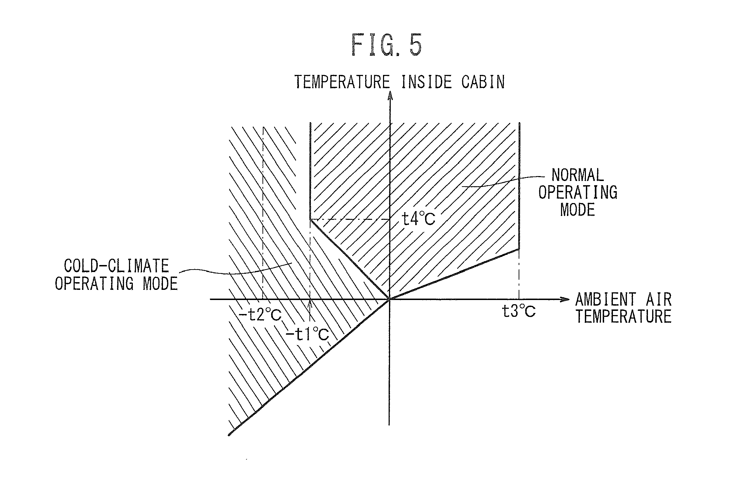

When the air conditioning system 10 is operated in a heating mode, as shown in FIG. 5, a cold-climate operating mode and a normal operating mode are established. The cold-climate operating mode and the normal operating mode, which are stored as a map in the controller 50, are preset based on the temperature outside of the vehicle and the temperature inside of the vehicle.

The cold-climate operating mode is an operating mode for quickly heating the cabin with higher emphasis placed on heating ability by increasing the electric power consumed by the compressor 16. The normal operating mode is an operating mode with higher emphasis placed on the heating COP (a measure of heating efficiency with respect to electric power). A heating efficiency index is given by the heating COP = heating ability/heating electric power consumption.

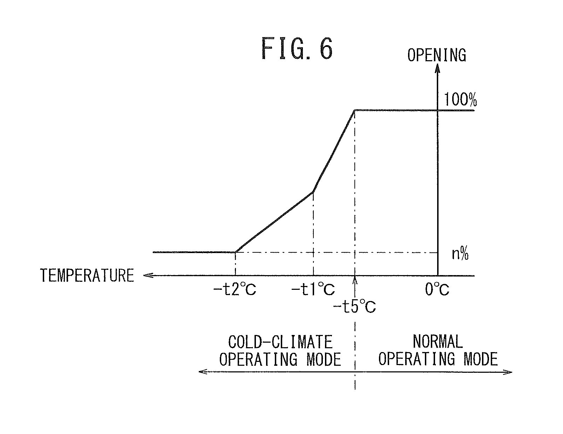

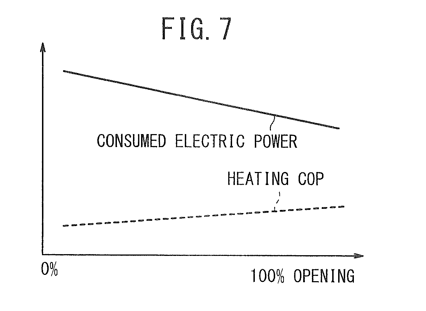

In the cold-climate operating mode, the opening of the electronic expansion valve 43 is reduced to impart a pressure loss to the refrigerant in the heat pump circulation path 18. The degree of opening and the temperature of the electronic expansion valve 43 are set so as to follow the relationship shown in FIG. 6. The relationship between the electric power consumed depending on the opening of the electronic expansion valve 43 and the heating COP is illustrated in FIG. 7.

When the air conditioning system 10 starts to operate in the heating mode, the first temperature sensor 52a detects the temperature outside of the vehicle, and the second temperature sensor 52b detects the temperature inside of the vehicle (step S1 in FIG. 3). Then, control proceeds to step S2, whereupon a decision is made concerning the map, based on the detected temperature outside of the vehicle and the detected temperature inside of the vehicle, for judging whether or not the vehicle is in a cold climate (step S3).

If the vehicle is judged to be in a cold climate (YES in step S3), then control proceeds to step S4 in which the air conditioning system 10 enters the cold-climate operating mode. In the cold-climate operating mode, the controller 50 adjusts the opening of the electronic expansion valve 43.

When the air conditioning system 10 operates in the heating mode, as shown in FIG. 2, the compressor 16 is actuated to deliver refrigerant into the heat pump circulation path 18. The refrigerant is supplied to the heater 26, which performs heat exchange between the refrigerant and the air-conditioning air (radiates heat into the air-conditioning air), to thereby increase the temperature of the air-conditioning air.

The solenoid-operated valve 38a is closed to allow the refrigerant, which has been discharged from the heater 26, to pass through the first bypass passage 42a directly into the gas-liquid separation refrigerant storage unit 34 in bypassing relation to the main condenser 32, while a pressure loss is imparted to the refrigerant by the electronic expansion valve 43. The refrigerant flows from the gas-liquid separation refrigerant storage unit 34 and through the subcondenser 36, which cools the refrigerant and delivers the cooled refrigerant to the expansion valve 22.

The refrigerant is depressurized by the expansion valve 22 and flows in a branching manner through the three-way valve 44a and into the branch path 28, from which the refrigerant is introduced into the second evaporator 30. The second evaporator 30 performs heat exchange between the refrigerant and a heat source in the cabin 14. The refrigerant then bypasses the first evaporator 24 and flows through the second bypass passage 42b and the expansion valve 22 back into the compressor 16.

If the vehicle is judged to not be in a cold climate (NO in step S3), then control proceeds to step S5, in which the air conditioning system 10 enters the normal operating mode. In the normal operating mode, the opening of the electronic expansion valve 43 is controlled to be at 100% (fully open state) (see -t5° C or higher) in order to operate the air conditioning system 10 with higher emphasis placed on the heating COP. The cold-climate operating mode and the normal operating mode are selectively carried out until the heating mode is stopped (step S6).

According to the first embodiment, the condenser 32, the gas-liquid separation refrigerant storage unit 34, and the subcondenser 36 are connected mutually in series downstream of the heater 26. The heat pump circulation path 18 includes the bypass unit 40, which connects the heater 26 to the gas-liquid separation refrigerant storage unit 34 in bypassing relation to the condenser 32 in the heating mode. The bypass unit 40 includes the electronic expansion valve 43.

When the air conditioning system 10 operates in the heating mode, as shown in FIG. 2, a portion of the heat pump circulation path 18 downstream of the heater 26 is connected through the electronic expansion valve 43 to the gas-liquid separation refrigerant storage unit 34 in bypassing relation to the condenser 32. The gas-liquid separation refrigerant storage unit 34 thus functions as a subcooling tank, while the subcondenser 36 is capable of functioning as a subcooling device (refer to the gas-liquid separation refrigerant storage unit 34 and the subcondenser 36 in FIG. 4).

In the cold-climate operating mode, the opening of the electronic expansion valve 43 is controlled to be in a closed state (n% in FIG. 6), thereby imparting a pressure loss to the refrigerant circulated in the heat pump circulation path 18. The pressure of the refrigerant is thus increased to provide a large subcooling region. Therefore, the amount of work performed (electric power consumed) by the compressor 16 is increased.

Consequently, the power of the compressor 16 can be positively extracted as heat for enabling an increased heating ability. The temperature of the air-conditioning air, which is heat-exchanged by the heater 26, is increased when the air-conditioning air is discharged into the cabin 14a, thereby quickly heating the cabin 14. Such an effect follows from the fact that the enthalpy difference in the heater 26 can be increased.

The subcooling region in the heating mode can be increased by reducing the opening of the electronic expansion valve 43 (see FIG. 4). Consequently, the inlet temperature of the gas-liquid separation refrigerant storage unit 34 and the subcondenser 36, which serves as a subcooling heat exchanger, can be lowered to a temperature equivalent to that of ambient air temperature, which is very low. Therefore, heat radiated from the subcooling heat exchanger into the ambient air is minimized.

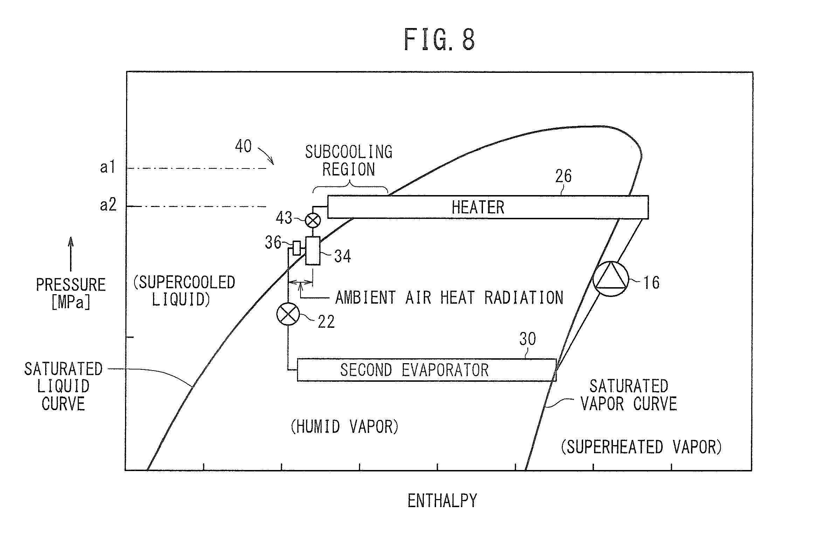

In the normal operating mode, the electronic expansion valve 43 is kept fully open (see FIG. 6). Therefore, in the cold-climate operating mode, as shown in FIG. 8, the pressure of the refrigerant in the heater 26 drops from a pressure a1 to a pressure a2. Therefore, the amount of work performed (electric power consumed) by the compressor 16 is reduced, and the heating COP is increased, thereby enabling the air conditioning system 10 to operate economically in the heating mode.

The refrigerant can thus be introduced as a perfect liquid medium into the expansion valve 22, and gas is effectively prevented from becoming trapped in the expansion valve 22. Therefore, the heat pump circulation path 18 is capable of stably circulating the refrigerant, thereby easily increasing heat exchange efficiency.

The gas-liquid separation refrigerant storage unit 34 is used as a subcooling tank. Consequently, the gas-liquid separation refrigerant storage unit 34 can provide a sufficient amount of refrigerant, thereby making it possible to prevent air-conditioning performance from being lowered due to a refrigerant shortage when the air conditioning system 10 operates in a transient mode.

Since the heater 26 carries out heat exchange sufficiently between the refrigerant and ambient air until the refrigerant enters into the subcooling region, it is possible to reduce the amount of heat that radiates from the subcondenser 36 into the ambient air.

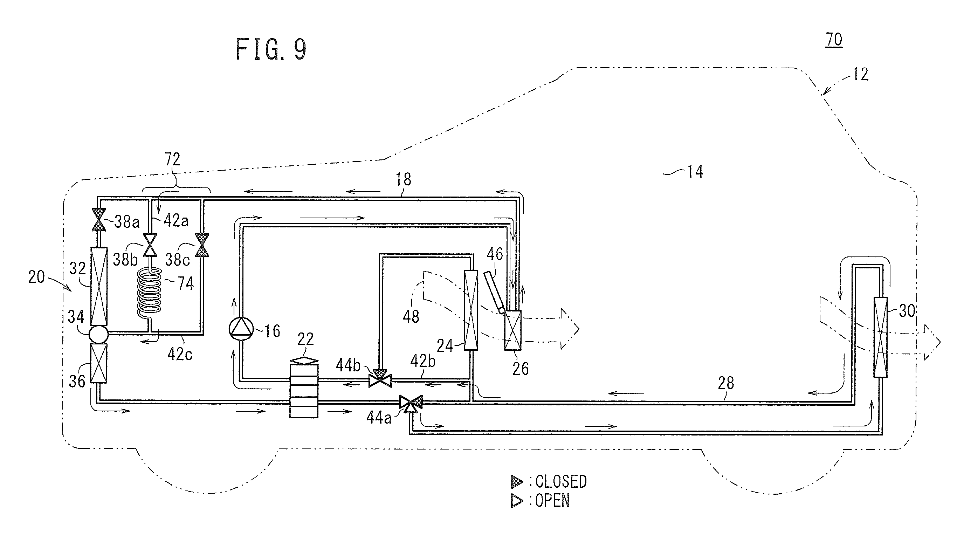

FIG. 9 is a schematic block diagram of a heat-pump type vehicular air conditioning system 70 to which an operating method according to a second embodiment of the present invention is applied.

Parts of the air conditioning system 70 according to the second embodiment, which are identical to those of the air conditioning system 10 according to the first embodiment, are denoted by identical reference characters, and such features will not be described in detail below.

The air conditioning system 70 includes a bypass unit 72, which connects the heater 26 and the gas-liquid separation refrigerant storage unit 34 to each other in bypassing relation to the condenser 32 in the heating mode. The bypass unit 72 includes a first bypass passage 42a and a third bypass passage 42c, together with a capillary 74, which is connected to the first bypass passage 42a and functions as a pressure loss device for imparting a pressure loss to the refrigerant. A solenoid-operated valve 38b is connected upstream of the capillary 74, and another solenoid-operated valve 38c is connected to the third bypass passage 42c.

Similar to the first embodiment, the air conditioning system 70 switches selectively between the cold-climate operating mode and the normal operating mode according to the flowchart shown in FIG. 3.

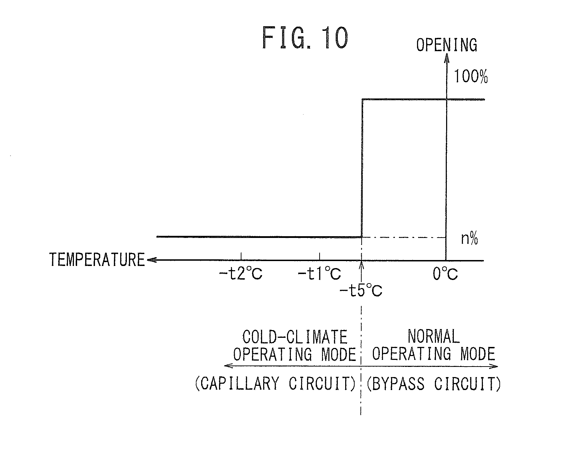

In the cold-climate operating mode (-t5°C or lower in FIG. 10), the solenoid-operated valve 38b is opened and the solenoid-operated valves 38a, 38c are closed. Therefore, the refrigerant is supplied to the capillary 74, which imparts a pressure loss to the refrigerant.

In the normal operating mode (-t5° C or higher in FIG. 10), the solenoid-operated valves 38b, 38a are opened and the solenoid-operated valve 38c is opened. The refrigerant is supplied directly to the gas-liquid separation refrigerant storage unit 34 in bypassing relation to the condenser 32 and the capillary 74.

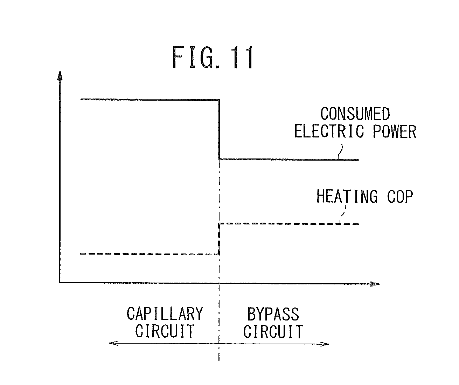

Therefore, as shown in FIG. 11, the consumed electric power and the heating COP are controlled when the solenoid-operated valves 38b, 38c are opened and closed to switch between the cold-climate operating mode, in which the refrigerant flows through the capillary 74, and the normal operating mode, in which the refrigerant flows through the third bypass passage 42c.

According to the second embodiment, in the cold-climate operating mode, the temperature of the air-conditioning air, which is heat-exchanged by the heater 26 and discharged into the cabin, is increased. Thus, in the normal operating mode, the amount of work performed by the compressor 16 is reduced to thereby increase the heating COP. Therefore, the second embodiment offers the same advantages as those of the first embodiment.

In FIG. 6, etc., relatively large temperature change intervals such as -t2° C, -t1° C have been illustrated. However, smaller temperature change intervals may be introduced in order to provide more control temperature points, such as -t8° C, -t7° C, -t6° C, -t5° C, ···, (not shown), for achieving the same advantages. While two operating modes, i.e., a "cold-climate operating mode" and a "normal operating mode", have been described above, other operating modes such as an "energy saver operating mode" may be added.

## Claims

1. A method of operating a heat pump type vehicular air conditioning system comprising:
a condenser (32) for performing heat exchange between a refrigerant and ambient air, the condenser (32) being connected to a heat pump circulation path (18) for circulating the refrigerant with a compressor (16);
a first evaporator (24) connected to the heat pump circulation path (18), for performing heat exchange between the refrigerant and air-conditioning air;
a heater (26) connected to the heat pump circulation path (18), for performing heat exchange between the refrigerant, which has been delivered from the compressor (16), and the air-conditioning air, which has passed through the first evaporator (24);
a second evaporator (30) connected to a branch path (28) that branches from the heat pump circulation path (18), for performing heat exchange between the refrigerant and a heat medium that is discharged from a cabin (14);
**characterized in that** said vehicular air conditioning system further comprises
a gas-liquid separation refrigerant storage unit (34) disposed downstream of the condenser (32);
a subcondenser (36) disposed downstream of the gas-liquid separation refrigerant storage unit (34);
a bypass unit (40) for connecting the gas-liquid separation refrigerant storage unit (34) downstream of and in series with the heater (26) in bypassing relation to the condenser (32) in a heating mode, the bypass unit (40) having a pressure loss device for imparting a pressure loss to the refrigerant; and
temperature detectors (52a, 52b) for detecting a temperature outside of a vehicle and a temperature inside of the vehicle,
wherein the method comprises the steps of:
establishing a cold-climate operating mode for increasing the temperature of the air conditioning air that is heated by the heater (26) and discharged into the cabin, and a normal operating mode for increasing heating efficiency with respect to electric power;
detecting the temperature outside of the vehicle and the temperature inside of the vehicle; and
selecting either the cold-climate operating mode or the normal operating mode based on the detected temperature outside of the vehicle and the detected temperature inside of the vehicle, and controlling the pressure loss device.

2. The method of operating the heat pump type vehicular air conditioning system according to claim 1, wherein the pressure loss imparted to the refrigerant is set to a greater value in the cold-climate operating mode than in the normal operating mode.

3. The method of operating the heat pump type vehicular air conditioning system according to claim 1, wherein the pressure loss device comprises an electronic expansion valve (43).

4. The method of operating the heat pump type vehicular air conditioning system according to claim 1, wherein the pressure loss device comprises:
a fixed restriction (74); and
a bypass passage (42c) connected in bypassing relation to the fixed restriction (74).

5. The method of operating the heat pump type vehicular air conditioning system according to claim 2, wherein in the cold-climate operating mode, the pressure loss is set to a larger value, and a larger subcooling region is established than in the normal operating mode.

## Patentansprüche

1. Verfahren zum Betreiben eines Klimaanlagensystems vom Typ einer Wärmepumpe für ein Fahrzeug, umfassend:
einen Kondensator (32) zum Durchführen eines Wärmeaustauschs zwischen einem Kühlmittel und Umgebungsluft, wobei der Kondensator (32) mit einer Wärmepumpe-Zirkulationsleitung (18) zum Zirkulieren der Kühlflüssigkeit mit einem Kompressor (16) verbunden ist;
einen ersten Verdampfer (24), welcher mit der Wärmepumpe-Zirkulationsleitung (18) verbunden ist, zum Durchführen eines Wärmeaustauschs zwischen dem Kühlmittel und der Klimatisierungs-Luft;
einen Heizer (26), welcher mit der Wärmepumpe-Zirkulationsleitung (18) verbunden ist, zum Durchführen eines Wärmeaustauschs zwischen dem Kühlmittel, welches von dem Kompressor (16) geliefert worden ist, und der Klimatisierungs-Luft, welche den ersten Verdampfer (24) durchlaufen hat;
einen zweiten Verdampfer (30), welcher mit einer Zweigleitung (28) verbunden ist, welche von der Wärmepumpe-Zirkulationsleitung (18) abzweigt, zum Durchführen eines Wärmeaustauschs zwischen dem Kühlmittel und einem Heizmedium, welches aus einem Fahrgastraum (14) abgegeben wird;
**dadurch gekennzeichnet, dass** das Fahrzeug-Klimaanlagensystem ferner umfasst:
eine Gas-Flüssigkeit-Trennungs-Kühlmittelspeicher-Einheit (34), welche stromabwärts von dem Kondensator (32) angeordnet ist;
einen Unter-Kondensator (36), welcher stromabwärts von der Gas-Flüssigkeit-Trennungs-Kühlmittelspeicher-Einheit (34) angeordnet ist;
eine Bypass-Einheit (40) zum Verbinden der Gas-Flüssigkeit-Trennungs-Kühlmittelspeicher-Einheit (34) stromabwärts und in Reihe mit dem Heizer (26) in Bypass-Beziehung mit dem Kondensator (32) in einem Heizmodus, wobei die Bypass-Einheit (40) eine Druckverringerungs-Vorrichtung zum Hervorrufen einer Druckverringerung an dem Kühlmittel aufweist; und
Temperaturdetektoren (52a, 52b) zum Detektieren einer Temperatur außerhalb eines Fahrzeugs und einer Temperatur innerhalb des Fahrzeugs,
wobei das Verfahren die Schritte umfasst:
Bereitstellen eines Betriebsmodus für kaltes Klima zum Erhöhen der Temperatur der Klimatisierungs-Luft, welche von dem Heizer (26) geheizt wird und in den Fahrgastraum abgegeben wird, und eines normalen Betriebsmodus zum Erhöhen der Heizeffizienz bezüglich elektrischer Leistung;
Detektieren der Temperatur außerhalb des Fahrzeugs und der Temperatur innerhalb des Fahrzeugs; und
Auswählen entweder des Betriebsmodus für kaltes Klima oder des normalen Betriebsmodus auf Grundlage der detektierten Temperatur außerhalb des Fahrzeugs und der detektierten Temperatur innerhalb des Fahrzeugs, und Steuern/Regeln der Druckverringerungs-Vorrichtung.

2. Verfahren zum Betrieben des Klimaanlagensystems vom Typ einer Wärmepumpe für ein Fahrzeug nach Anspruch 1, wobei die auf das Kühlmittel ausgeübte Druckverringerung in dem Betriebsmodus für kaltes Klima auf einen größeren Wert gesetzt wird als in dem normalen Betriebsmodus.

3. Verfahren zum Betreiben des Klimaanlagensystems vom Typ einer Wärmepumpe für ein Fahrzeug nach Anspruch 1, wobei die Druckverringerungs-Vorrichtung ein elektronisches Expansionsventil (43) umfasst.

4. Verfahren zum Betreiben des Klimaanlagensystems vom Typ einer Wärmepumpe für ein Fahrzeug nach Anspruch 1, wobei die Druckverringerungs-Vorrichtung umfasst:
eine feste Drosselung (74); und
einen Bypass-Durchgang (42c), welcher in Bypass-Beziehung zu der festen Drosselung (74) verbunden ist.

5. Verfahren zum Betreiben des Klimaanlagensystems vom Typ einer Wärmepumpe für ein Fahrzeug nach Anspruch 2, wobei in dem Betriebsmodus für kaltes Klima die Druckverringerung auf einen größeren Wert gesetzt wird, und ein größerer Unterkühlungsbereich hergestellt wird als in dem normalen Betriebsmodus.

## Revendications

1. Un procédé de fonctionnement d'un système de climatisation pour véhicule du type pompe à chaleur comprenant :
un condenseur (32) pour procéder à un échange de chaleur entre un réfrigérant et l'air ambiant, le condenseur (32) étant relié à une voie de circulation de la pompe à chaleur (18) pour faire circuler le réfrigérant avec un compresseur (16) ;
un premier évaporateur (24) relié à la voie de circulation de la pompe à chaleur (18) pour procéder à un échange de chaleur entre le réfrigérant et l'air de climatisation ;
un dispositif de chauffage (26) relié à la voie de circulation de la pompe à chaleur (18) pour assurer un échange de chaleur entre le réfrigérant qui a été amené du compresseur (16) et l'air de climatisation qui a traversé le premier évaporateur (24) ;
un deuxième évaporateur (30) raccordé à une branche (28) qui part de la voie de circulation de la pompe à chaleur (18) pour procéder à un échange de chaleur entre le réfrigérant et un milieu de chaleur qui est déchargé d'une cabine (14) ;
**caractérisé en ce que** ledit système de climatisation du véhicule comprend par ailleurs :
une unité de stockage du réfrigérant à séparation gaz/liquide (34) disposée en aval du condenseur (32) ;
un sous-condenseur (36) disposé en aval de l'unité de stockage du réfrigérant à séparation gaz/liquide (34) ;
une unité de dérivation (40) pour relier l'unité de stockage du réfrigérant à séparation gaz/liquide (34) en aval et en série du dispositif de chauffage (26) en dérivation par rapport au condenseur (32) dans un mode de chauffage, l'unité de dérivation (40) possédant un dispositif de perte de pression pour assurer une perte de pression du réfrigérant ; et
des détecteurs de température (52a, 52b) pour détecter une température à l'extérieur d'un véhicule et une température à l'intérieur du véhicule,
dans lequel le procédé comprend les étapes suivantes:
établissement d'un mode opératoire en climat froid pour augmenter la température de l'air de climatisation qui est chauffé par le dispositif de chauffage (26) et déchargé dans la cabine et un mode opératoire normal pour augmenter le rendement thermique par rapport à l'alimentation électrique ;
la détection de la température à l'extérieur du véhicule et de la température à l'intérieur du véhicule ; et
la sélection soit du mode opératoire en climat froid, soit du mode opératoire normal sur la base de la température détectée à l'extérieur du véhicule et de la température détectée à l'intérieur du véhicule et la commande du dispositif de perte de pression.

2. Le procédé de fonctionnement du système de climatisation pour véhicule du type à pompe à chaleur selon la revendication 1, dans lequel la perte de pression infligée au réfrigérant est réglée à une valeur supérieure en mode opératoire en climat froid qu'en mode opératoire normal.

3. Le procédé de fonctionnement du système de climatisation pour véhicule du type à pompe à chaleur selon la revendication 1, dans lequel le dispositif de perte de pression comprend une vanne d'expansion électronique (43).

4. Le procédé de fonctionnement d'un système de climatisation pour véhicule du type à pompe à chaleur selon la revendication 1, dans lequel le dispositif de perte de pression comprend :
une restriction fixe (74) ; et
un passage de dérivation (42c) relié dans une relation de dérivation à la restriction fixe (74).

5. Le procédé de fonctionnement du système de climatisation pour véhicule du type à pompe à chaleur selon la revendication 2, dans lequel la perte de pression est réglée à une valeur plus élevée et une région de sous-refroidissement plus grande est constituée dans le mode opératoire en climat froid que dans le mode opératoire normal.
